# EUROPEAN PATENT SPECIFICATION

(11) **EP 2 032 231 B1**
(45) Date of publication and mention of the grant of the patent: **26.12.2018**
(21) Application number: 07795898.1
(22) Date of filing: 08.06.2007
(51) Int. Cl.: G01D 4/00

(54) **SYSTEM FOR REMOTE UTILITY METERING AND METER MONITORING**
SYSTEM ZUR FERNMESSUNG EINES VERSORGUNGSNETZES UND MESSGERÄTÜBERWACHUNG
SYSTÈME DE COMPTAGE DE SERVICES PUBLICS ET DE SURVEILLANCE DE COMPTEURS À DISTANCE

(30) Priority: 08.06.2006 US 811765 P; 11.12.2006 US 869501 P
(43) Date of publication of application: 11.03.2009
(73) Proprietor: Mueller International, LLC, Atlanta, GA 30328 (US)
(72) Inventor: PITCHFORD, Barth, Robins, Fairfax, VA 22032 (US); PITCHFORD, William, Dudley, Fairfax, VA 22030 (US); SIMON, Robert, Paul, Fairfax, VA 22032 (US); BINNING, C., David, Warrenton, VA 20187 (US); RASMUSSEN, David, Lewis, Vienna, VA 22181 (US)
(74) Representative: Leffers, Thomas
(86) International application number: PCT/US2007/013505
(87) International publication number: WO 2007/146121

(56) References cited:
- WO-A2-03/007001
- CN-A- 1 155 072
- JP-A- H09 318 618
- JP-A- S62 190 420
- KR-A- 20040 073 897
- US-A- 5 659 300
- US-A1- 2005 212 710
- US-A1- 2005 212 710
- US-A1- 2006 045 105
- US-A1- 2006 114 121
- US-B1- 6 327 541

## Description

### FIELD OF THE INVENTION

The present invention relates generally to automated utility meter reading and more specifically to a water meter monitoring system for transmitting meter reading information to a remote location.

### BACKGROUND OF THE INVENTION

Municipal or private water deliver systems usually deliver water from a central location through a distribution network to water customers on a cost per unit of volume basis, most often cost per gallon or cost per liter. In these systems, a water meter is typically placed between a common water supply pipe and a customer property to measure the amount of water flowing from the supply pipe to the customer. In order to bill the customer for water usage, it is necessary to periodically read the meter to determine the amount of usage over a fixed period of time. This process is referred to in the industry as metering or meter reading.

Historically, metering has been a labor intensive process, and due to the manual steps required, one that is prone to error. Some improvements have been made by utilizing automated meter reading (AMR) techniques to capture and transmit meter reading information electronically, such as to a technician with a receiving device near the meter or to another remote location. However, these automated systems still suffer from various shortcomings including limited battery life, limited transmission range, and lack of remote addressability, among others.

US 2005/212710 A1 discloses a water meter monitoring system for remote communication, which comprises a water meter body for coupling a water supply source to a water consumer, a flow meter contained within the water meter body that is configured to bidirectionally measure a flow rate of water through the water meter body, a controller coupled to the water meter body and the power supply system, at least one antenna for remote communication and a power supply system including at least one battery.

CN 1 155 072 A discloses a micropower consumption prepayment control device for gas meter and water meter and its pipeline turn-off device, wherein a signal-collecting device is connected to a counter device of a mechanical flowmeter, whereby the output end of the control circuit is connected to an actuating mechanism for turning of the pipeline.

JP S62 190420 A discloses a flow rate measuring instrument, which can autonomously transmit water consumption data to a center without receiving supply of power from the outside by supplying electricity generated by a DC generator directly connected with a flowmeter to a processor and charging a storage battery with the surplus electricity, wherein the electricity is generated by the DC generator by means of a propeller when the water is flowed through the system.

JP H09 318618 A discloses a water quality meter, which is equipped with a water quality sensor which is arranged in the housing of the water quality meter, and wherein an amplifier section is connected to the sensor and an electric source supplies drive power to the amplifier section and to the sensor.

KR 2004 0073897 A discloses a freeze protection system for water gauge, which is composed of an electricity generating unit installed to a pipe connected from the water gauge to a drainage area, and which is equipped with a charger for receiving and storing the electrical energy output from the electricity generating unit.

### SUMMARY OF THE INVENTION

In view of the aforementioned shortcomings of conventional meter reading systems, a water meter monitoring system according to claim 1 is provided.

The remote water meter monitoring system comprises a water meter body coupling a water supply source to a water customer, a flow sensor contained within the water meter body that is configured to measure a bidirectional flow rate of water through the water meter, a power supply system including at least one battery, at least one capacitor, at least one rectifier circuit, and a power generator, wherein the power generator is powered by a flow of water through the water meter body, a controller communicatively coupled to the water meter body and power supply system, and at least one antenna connected to the controller.

A wireless remote water meter monitoring network comprises at least one central data processing system, at least one bridge device communicatively coupled to the at least one central data processing system, and a plurality of network nodes, each network node configured to perform two-way communication with the at least one bridge device, either directly or through one or more other network nodes, wherein each network node comprises a water meter housing coupling a water customer with a water supply line, a flow measurement device in the water meter housing for measuring a volume of water flowing through the meter, a power supply circuit including at least one power storage device, at least one capacitive device and a power converter, wherein the power converter is powered by water flow through the meter, and a communication circuit comprising a mesh-type controller and an antenna, wherein the communication circuit is coupled to the flow measurement device and the power supply circuit and is adapted to perform two-way communication.

A circuit for a wireless water meter monitoring system comprises a mechanical energy harnessing sub-circuit for converting water flow mechanical energy into electrical energy comprising a pair of magnetically coupled rotors driven by water flow and having a plurality of magnets affixed thereto that rotate around a set of coils, thereby inducing a current in the coils, an energy storage and delivery sub-circuit comprising at least one rectifier circuit electrically coupled to the coils, at least one capacitor charged by the at least one rectifier circuit, at least one battery, and a switch for permitting the at least one battery to be charged by the at least one capacitor and for selecting either the at least one capacitor or the at least one battery to supply continuous power to the circuit and to manage charging of the at least one battery, a water flow counting sub-circuit comprising a plurality of flux change detectors that detect flux changes caused by a magnet rotating about a shaft driven by a flow sensor of a water flow chamber, a communication sub-circuit electrically coupled to the energy storage and delivery sub-circuit and the water flow counting sub-circuit comprising a mesh-type transceiver and an antenna for enabling two-way communication between the wireless water meter monitoring system and other systems, and a sensor sub-circuit electrically coupled to the energy storage and delivery sub-circuit and the communication sub-circuit for recording sensor data and comprising at least one sensor device.

These and other embodiments and advantages of the present invention will become apparent from the following detailed description, taken in conjunction with the accompanying drawings, illustrating by way of example the principles of the invention.

### BRIEF DESCRIPTION OF THE DRAWINGS

Figure 1 is an illustration of a typical water utility distribution network beginning with a water utility supply and terminating in a plurality of water consumers.
Figure 2 is a network diagram of a remote water meter monitoring system.
Figure 3 is an illustration of a water meter pit including a remote water meter monitoring system.
Figure 4 is a block circuit diagram of electrical components of a remote water meter monitoring system.
Figure 5 is a block diagram of the power conversion circuit for a remote water meter monitoring system.
Figure 6 is a flow chart of a method of converting mechanical water flow energy into electrical energy in a remote water meter monitoring system
Figures 7A and 7B are different views of a water measurement head including a power conversion generator for a remote water meter monitoring system.
Figures 8A and 8B are different views of a water chamber and water measurement head including a water counting system for a remote water meter monitoring system.
Figure 9 is a flow chart of a method for measuring water flow with a remote water meter monitoring system according to various embodiments of the invention.
Figure 10 is a block diagram illustrating the various logic modules utilized in the remote water meter monitoring system.

These and other embodiments and advantages of the present invention will become apparent from the following detailed description, taken in conjunction with the accompanying drawings, illustrating by way of example the principles of the invention.

### DETAILED DESCRIPTION

The following description is intended to convey a thorough understanding of the embodiments described by providing a number of specific embodiments and details involving systems and methods for remote water meter monitoring.

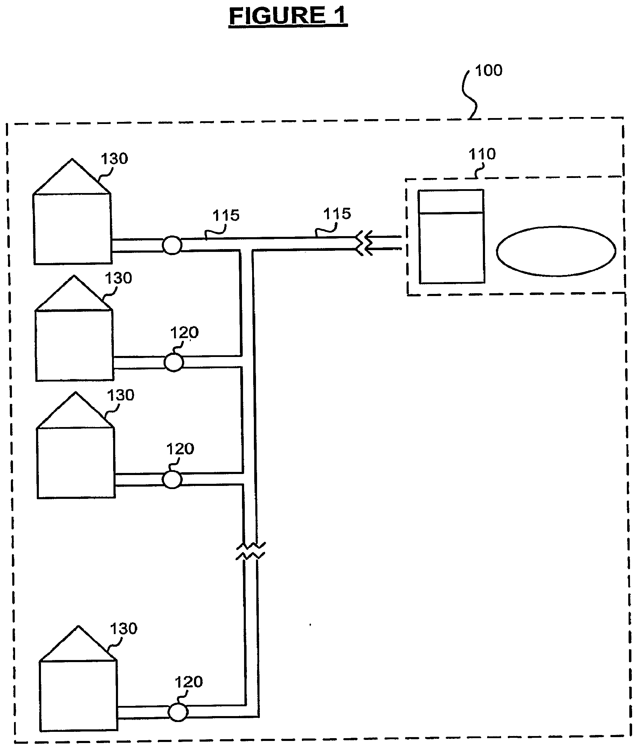

Referring now to Figure 1, this Figure is an illustration of a typical water utility distribution network beginning with a water utility supply and terminating in a plurality of water consumers. The network 100 begins with a water service provider 110 such as a public water utility or commercial water service provider. As is known in the art, the water service provider 110 may comprise a water reservoir and various water quality processing elements that condition the water prior to being piped to consumers. One or more water supply pipes 115 flow out of the water service provider 110 creating a water distribution network. The one or more water supply pipes 115 provide water to a plurality of water consumers 130. For ease of illustration, the water consumers 130 are illustrated as residential units. However, the water consumers may be businesses, factories, irrigations systems, or other entities that receive water from the water service provider 110.

Each water consumer 130 is coupled to the at least one water supply line 115 by a water meter 120. The water meter provides a physical interconnection between consumers 130 and the water supply line 115. The water meter 120 also measures the amount of water flowing to each consumer from the supply line 115. This data is typically used to bill the customer for their water consumption over a specified time period such as a month or quarter. The water meter 120 includes a dial, gauge, or other display that quantifies the amount of water that has passed through the meter into a number of gallons. As discussed above, in order to bill customers for their water consumption, the water utility usually sends a meter reader out to the read the number from each water meter 120. The previous reading is subtracted from this number and the corresponding numbers of gallons consumed are billed to the customer.

A conventional water meter usually includes a water chamber having a water input, a water output, and a water flow measuring device, such as a rotating, nutating or oscillating disk, or other flow meter, that drives the gauge on the top surface of the meter. The meter chamber is usually made of a non-corrosive metal such as copper or bronze. Also, the pipe connecting the meter chamber usually includes a manual shut off valve that can be manually engaged to prevent water from flowing from the supply pipe 115 to the consumer 130 through the meter 120, to facilitate the repair or replacement of the water meter or other elements within the customer premises.

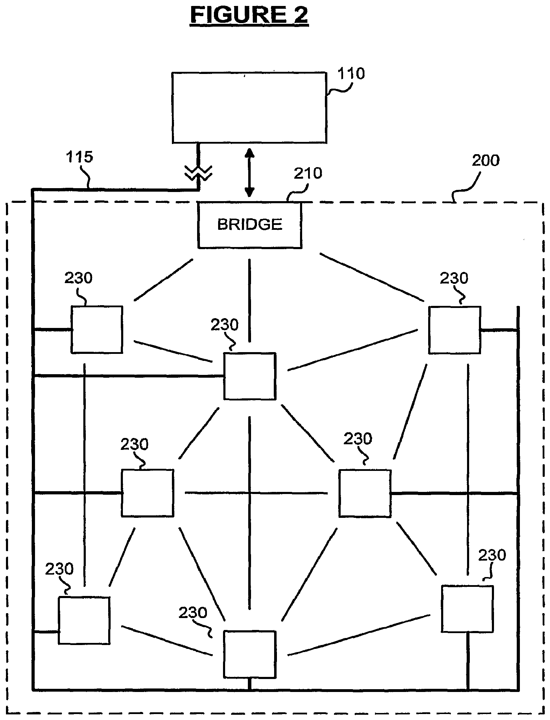

Figure 2 is a network diagram of a remote water meter monitoring system. The network 200 shown in Figure 2 is similar to that of Figure 1 in that a water service provider 110 is coupled to a plurality of water consumers via a water supply pipe 115. However, in the network 200 of Figure 2, each water consumer is represented by a wireless communication based network node 230. For purposes of this disclosure and claims the network node 230 comprises with physical water meter housing as well as the power, control and communications circuitry. Water enters each of the consumer premises from the supply line 115 via the water meter housing of each node 230. Each node 230 also comprises a wireless ad hoc network transceiver unit that is operable to wirelessly transmit water meter reading information to a bridge device 210, which. in turn, passes the information to one or more server computer systems associated with the water service provider 110. This information may be accessible over a wide area network, such as the Internet, by anyone having appropriate access credentials with a network browser, such as an Internet web browser.

The bridge device 210 may communicate with the one or more server computer systems (not shown) via a land line, a wireless cellular connection, a wireless 802.11x connection, WiFi, (including municiple WiFi and WiMAX), fiber optic connection, a cable connection, a twisted-pair copper phone line, a satellite connection, other known or previously unknown communications medium, or combinations of any of these. The specific communications medium between the bridge device 210 and the one or more server computers is not.

With continued reference to Figure 2, each node 230 acts as both a sensor and a data router. Each node may transmit a signal directly to the bridge device 210, or pass the information through one or more other network nodes 230. This feature of self-forming, self-healing ad hoc networks is known in the art and particularly advantageous because the physical environment of the network 200 may change due to the presence of cars, trucks and other temporary obstructions within the network 200, affecting the propagation of radio frequency (RF) signals between nodes or between a node and the bridge device 210.

It should be appreciated that each network node 230 may upload information to the bridge 210 as well as receive information and/or instructions from the bridge 210. That is, a network node 230 may repeat a signal destined for the bridge device 210 or one that is destined for another node 230. Techniques and algorithms for optimizing ad hoc or mesh networks are well known in the art. Various embodiments do not depend on any particular type or brand of ad hoc or mesh network hardware.

As will be discussed in greater detail herein, in the network 200, each network node 230 may upload information according to a predetermined schedule, such as, for example, once every hour. Also, an upload signal may be sent on demand, from the bridge device 210 to each of the network nodes 230 causing them to perform a specified task or to upload information to the bridge device 210.

It should be appreciated that this information may include current water meter reading information as well as other information associated with the node, such as, for example, current state, power information, temperature information, water pressure information, backflow indication, and/or any other sensor-based information from one or more electronic sensors in communication with the network node 230, as will be discussed in greater detail herein.

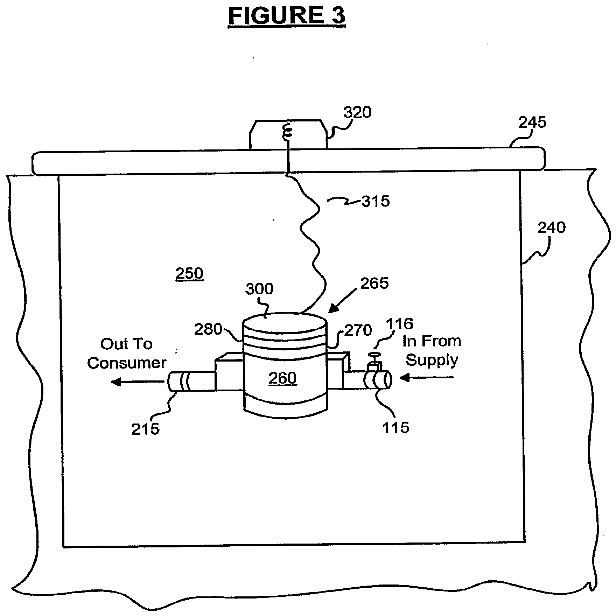

Referring now to Figure 3, this Figure is an illustration of a water meter pit including a remote water meter monitoring system. In a conventional system, a water pit typically includes a water meter, that is comprised of a water chamber and a water measurement head that is equipped with a gauge or other meter on the top and a manually shut off valve coupling the water supply line to the customer premises. In the system depicted in Figure 3, the conventional water measurement head has been replaced with a new water measurement head, 265. The water meter 250 may include a water chamber 260 through which water flow passes from the water supply 115 to the consumer water system 215, and a water measurement head 265 that attaches to the water chamber 260. The measurement head 265 may also include a water counting module 270 having a flow meter, a power conversion module 280 and a control module 300. The control module 300 may also include a wireline connection 315 to an antenna 320 coupled to the meter pit cover 245. In various embodiments, the meter pit cover 245 may comprise a metal plate with a through-hole near the center allowing the antenna 320 to contact the wire 315. The antenna 320 may be encased in resin or plastic, or other material, in order to prevent breakage when the meter pit cover 245 is stepped on or driven over with a bicycle, car, or other vehicle. The fact that the meter pit cover 245 is a relatively massive, conductive object, it serves as an ideal ground plane for the antenna thereby increasing the range and performance of the wireless network. This is particularly advantageous for retrofitting the system to existing water supply networks. The only required modification to the meter pit cover 245 is making a through-hole and attaching the antenna 320.

Therein, a separate manual shut-off valve 116 is placed or left in the meter pit 240 to permit manual shut off of the water supply using conventional techniques. Alternatively, and/or in combination therewith, an electronically controllable shut off valve is incorporated into the water chamber 260, or attached pipe, 215, thereby permitting remote water shut off, as will be discussed in greater detail herein. This electronically controllable shut off valve may comprise a spring loaded valve. Therein, this valve may be manually tensioned into an open position with an external switch or valve control. A solenoid may be used to release the shut off valve based on a remote command received by the control module 300 of the meter system 250. This may require the water service provider to send a technician or other person out to the customer premises to return the shut off valve to the pre-tensioned, open position, such as, for example, after the consumer's water service account has been made current.

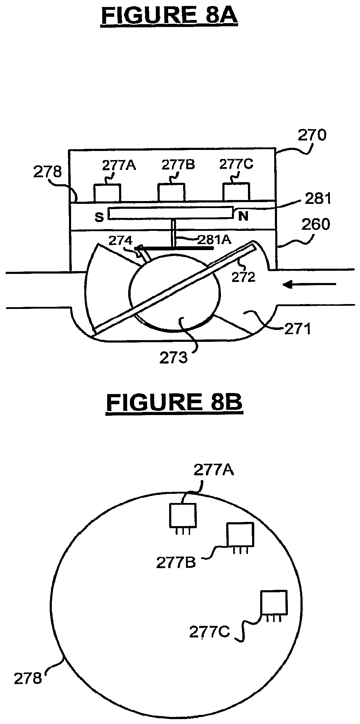

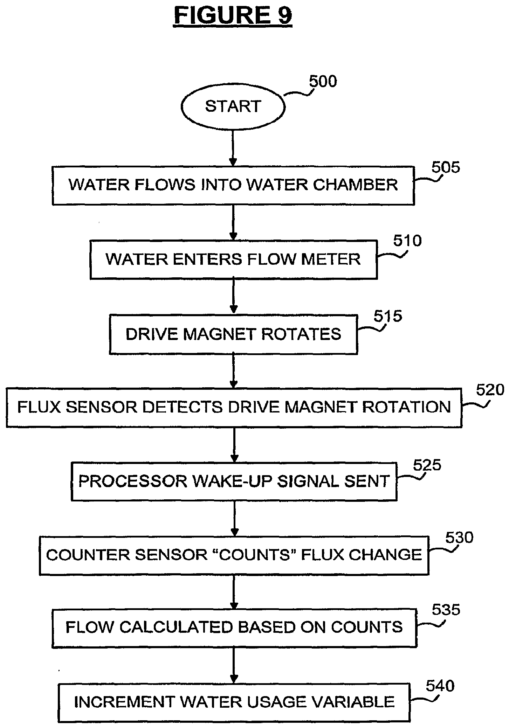

In the water meter, 250, according to Figure 3, water flowing through the water chamber 260 may be counted by the water counting module 270 using a nutating valve assembly or other water volume measuring device that passes a known volume of water with each complete rotation, as is discussed in greater detail in the context of Figures 8 and 9. It should be appreciated that various embodiments are not reliant on the particular type of water volume measuring device that is utilized. Several such mechanical devices are known in the art.

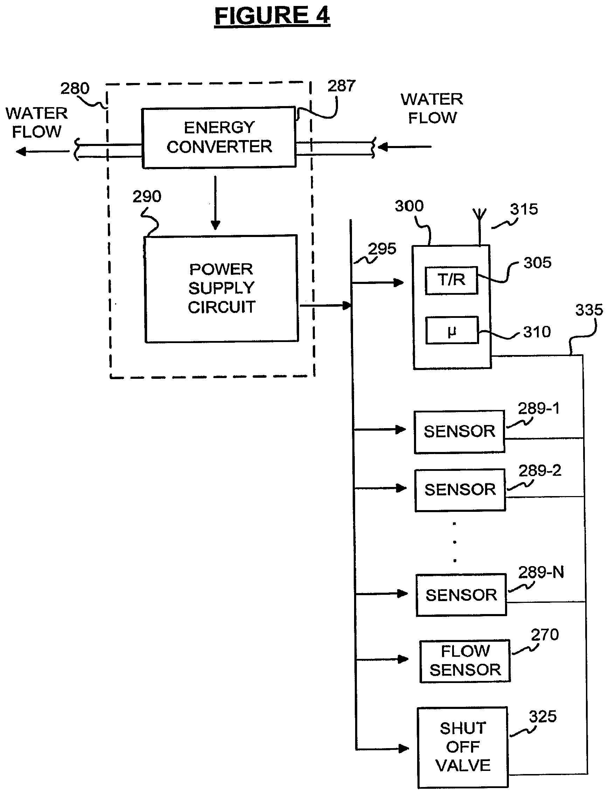

Also, in the water meter 250, mechanical energy of the pressurized water passing through the water chamber 260, may be harnessed by the power conversion module 280 to provide electrical power for all the meter system components in the measurement head 265, as is discussed in greater detail in the context of Figures 4 to 6.

Referring now to Figure 4, this Figure is a block circuit diagram of electrical components of a remote water meter monitoring system. The electrical components include a power conversion module 280. The power conversion module 280 includes a mechanical energy converter 287 located in the water chamber 260. The energy converter 287 may include an impellor, nutating disk, blade assembly or other surface area device rotating about a drive shaft to which torque is imparted by the flow of water. This rotating shaft may be used to energize one or more components in a power converter and supply module 290. The power converter and supply 290 may include one or more capacitors, one or more batteries, and control logic and/or switches for supplying system power to various components of the remote water meter monitoring system.

The power converter and supply 290 may output power to a power bus 295. The power bus 295 may supply power to the control module 300 as well as one or more sensors 289-1, 289-2. The power bus 295 may also supply power to a solenoid or other actuator of an electronic shut off valve 325.

The control module 300 may include a transmitter and receiver (transceiver) 305, a microprocessor 310 and one or more memory structures (not shown) storing a control program executed by the control module 300 as well as historical data from the water counting module 270 and sensors 289-1, 289-2, ..., 289-N. The sensors 289-1, 289-2, ..., 289-N, may comprise water pressure sensors, temperature sensors, water quality sensors, or other sensors. Alternatively, or in combination, the sensors 289-1, 289-2, ..., 289-N may be incorporated into a single sensor module, such as a board or chip-based sensor lab that performs a variety of diagnostic tests on the water. The sensor information may be communicated periodically or in real time to the control module 300 via communication bus 335, such as universal asynchronous receiver/transmitter (UART), serial peripheral interface (SPI) bus, inter-integrated circuit (1²C), 1-Wire or USB. Also, the control module 300 may poll the one or more sensors 289-1, 289-2, ..., 289-N periodically or on demand to obtain information corresponding to water conditions, current or past. The water counting module 270 may be electrically coupled to the power bus 295 and communicatively coupled to the control module 300 via the data bus 335.

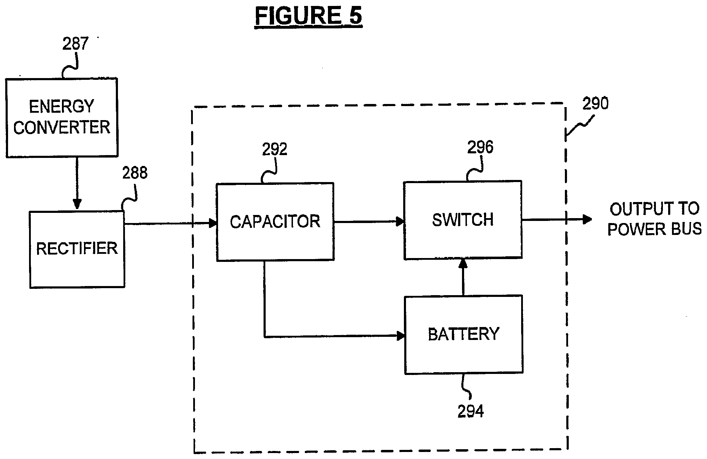

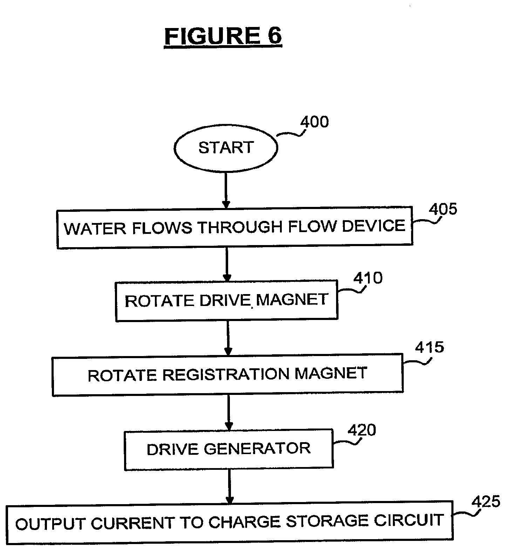

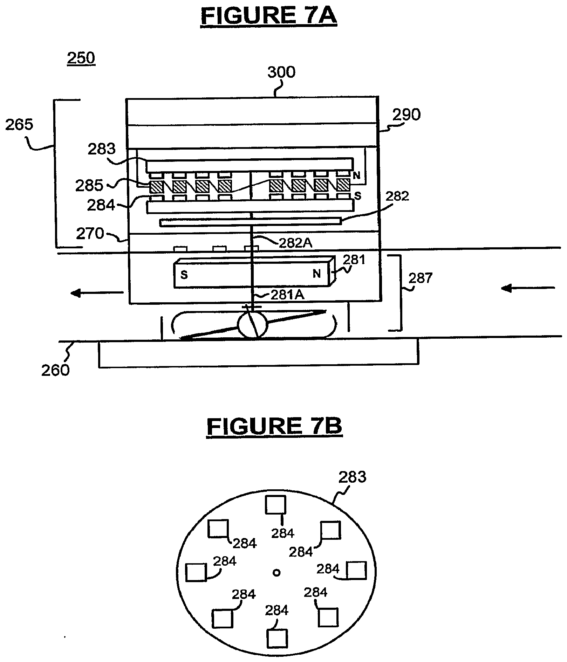

Referring now to Figure 5, this Figure is a block diagram of a power conversion circuit of a power conversion module for a remote water meter monitoring system. As discussed briefly in the context of Figure 4, the power conversion circuit may include an energy converter 287 driven by a mechanical energy of water flow. The energy converter 287 may convert the mechanical energy of the rotating shaft into electrical energy as discussed in greater detail in the context of Figures 6 and 7. After conversion by rectifier 288, the electrical energy generated by the energy converter 287 may charge a capacitor 292 of the power converter and storage module 290, which may in turn charge a battery 294. A switch 296 may select either the capacitor 292 or the battery 294 to supply output power, such as to the power supply bus 295 shown in Figure 4. Therein, the switch 296 may include decision logic for selecting either the capacitor 292 or the battery 294 based on a current state of either or both devices, or in accordance with a predetermine power management scheme stored in a memory device of the switch 296 or another memory structure external to the switch 296. In various embodiments, by placing the capacitor 292 between the energy converter 287 and the battery 294, the number of charge cycles of the battery 294 may be significantly reduced over direct charging techniques, thereby increasing the effective life of the system. Also, the switch 296 may help to insure that the battery 294 is charged by the capacitor 292 only after the battery 294 has been fully discharged to avoid battery memory problems and increase the usable life of the battery 294.

Figure 6 is a flow chart of a method of converting mechanical water flow energy into electrical energy in a remote water meter monitoring system. The method begins in block 400 and proceeds to block 405 where water flowing through the meter's water chamber rotates a turbine, impeller, blade and shaft assembly, or other mechanism that rotates with the flow of water, or causes a nutating disk assembly or other volume measuring assembly to be actuated. The mechanical energy created in block 405, in the form of the shaft rotation, is used to drive a drive magnet, in block 410. In block 415, the rotation of the drive magnet creates a time varying magnetic flux density that drives a registration magnet, which, in various embodiments, may be located above the portion of the meter assembly through which water is flowing. In block 420, the rotation of the registration magnet may drive the generator, either directly, such as via a drive shaft, or indirectly, through a mechanical gear assembly. In various embodiments, this may comprise spinning a pair of magnetically coupled rotors around a set of coils as discussed in the context of Figures 7A and 7B. The time changing magnetic flux caused by the rotation of the magnetically coupled rotors induces a time varying current in the coils generating an electrical current. In block 425, the current created in block 420 is output to a charge storage circuit. In various embodiments, this may comprise communicating the current to the input of a rectifier circuit that converts alternating current (AC) to direct current (DC) that can be used to create a stored charge in the capacitor. This stored charge can be used to provide line power to the remote meter monitoring system. This stored charge can also be used to charge the battery of the power conversion module.

Figures 7A and 7B are different views of a water meter, including a power conversion generator for a remote water meter monitoring. Figure 7A shows a cut-away view of the water meter system 250, including the energy converter 287. Water enters the water chamber 260 in the direction indicated by the arrow 115A. The force of this water contacts the energy converter 287, which, in this example, includes a nutating disk assembly. It should be appreciated that another water volume measuring device may be utilized to measure the flow rate. In the exemplary embodiment depicted in Figure 7A, the nutating disk's motion drives a drive magnet 281 via a drive shaft 281A in the water chamber 260. In addition to providing a magnetic flux change detectable by the water counting module 270, the drive magnet 281 drives a registration magnet 282, located in the measurement head 265, via magnetic conduction. The registration magnet 282 rotates about an axis 282A, which also controls the rotation of the rotor elements 283 of the power conversion module 280. The power conversion module 280, also referred to herein as a generator, may comprise a pair of magnetically coupled rotors 283 that face each other having magnetic plates 284 affixed thereto, the rotation of which is driven by the registration magnet, either directly, or via a mechanical gear assembly.

Therein, such as is shown in the context of Figure 7B, each rotor 283 may have a number of magnets, or magnetic plates 284 affixed thereto. For illustration purposes only, eight magnets are shown in Figure 7B. However, it should be appreciated that more or fewer magnets maybe used. Also, a magnetic disk with one or more magnetic pole pairs may be utilized instead of the rotor 283 shown in Figure 7B. In fact, the various embodiments are not tied to any particular rotor design. In the example of Figures 7A and 7B, the magnets 284 are coupled to one another with North-South poles facing each on the respective upper and lower rotors 283. Between the rotors 283 is a set of fixed conductive coils 285. In various embodiments a number of multi-turn coils may be suspended between the magnetically coupled rotors. Also, the coils 285 may be oriented so that when the rotors 283 rotate, the direction of the magnetic field passes through the center axis of each coil, thereby inducing a maximum current in each coil 285. However, it should be appreciated that other orientations may be utilized as well. Furthermore, the number of coils that may be utilized is not critical.

With continued reference to Figure 7A, as the water flow drives the rotation device, this in turn rotates the drive shaft 281A. Rotation of the drive shaft causes the drive magnet 281 to rotate, either directly, or indirectly, through a gear assembly. Rotation of the drive magnet 281, in turn, may cause a registration magnet 282 to rotate via magnetic conduction. The registration magnet may rotate about its own shaft 282A. Rotation of the shaft 282A may cause a pair of magnetically coupled rotors 283 to rotate, thereby inducing a current in a series of coils 285 suspended between the facing rotors 283. This current may have a generally sinusoidal magnitude over time due to the changing pattern of magnetic flux density over the rotors' 283 rotation. The outputs of the coils 285 are supplied to the input of the power conversion and supply module 290. For example, the output of the coils 285 may be rectified and used to charge a capacitor such as the capacitor 292 in Figure 5.

Referring now to Figures 8A and 8B, these Figures are different views of a water chamber and water measurement head including a water counting system for a remote water meter monitoring system. The water counting module 270 is comprised of a water counting mechanism. The water counting mechanism is configured to quantify motion of a volumetric element to a specified volume of water. This in turn can be used to determine water consumption through the meter. One example of such a volumetric element is a nutating disk based system, such as that depicted in Figure 8A. It should be appreciated that other mechanical volume meters may be used. In the example of Figure 8A, water entering the water chamber 260 passes through a disk chamber 271. A nutating disk 272 wobbles about a ball and cradle type joint 273 having a center axis 274. The movement of the center axis 274 causes a shaft 281A to drive a magnet 281. Thus, each rotation of the magnet 281 may be correlated mathematically to the passage of a discrete and known volume of water. A plurality of magnetic flux detectors 277A, 277B, 277C, such as a Hall effect sensors or other sensors, attached to the cover 278 are used to "count" the number of rotations of the drive magnet 281. Using a known conversion parameter, these counts may be used to determine flow rate and therefore water consumption.

In the exemplary system shown in Figure 8, three sensors 277A, 277B, and 277C are used. According to the invention the first sensor 277A may be used to selectively wake up a controller in the control module 300 from a sleep or low power state. For example, the CPU of the control module may default to a sleep state to reduce power consumption. When the first sensor 277A senses a magnetic flux change caused by rotation of the drive magnet 281, it may send a signal to wake up the processor of the control module via an interrupt pin on the CPU, causing the CPU to prepare to begin recording water consumption.

The second sensor 277B is used to count the number of rotations of the magnet that occur. A parameter may be stored in advance in the controller or elsewhere correlating the number of rotations per gallon of water flow. Thus, in various embodiments, each count by the sensor 277B sends a signal to the control module. Every N of these signals may cause the microprocessor to increment a water usage variable stored in memory to reflect the increased water consumption.

The third sensor 277C is incorporated to permit the system to detect a backflow condition, that is, water flowing into the supply pipe from a customer premises. This may be indicative of incorrectly connected plumbing lines within the premises, an attempt to introduce contaminants into the water supply, or even a break in the water supply line. By positioning the third sensor 277C within a predetermined number of radians with respect to the second sensor 277B, such as, for example, between π/4 and π/2 radians, it may be possible to determine the direction of water flow through the chamber 271. This may be done by comparing the measured north-south pole transitions from the second sensor 277B and the third sensor 277C for a given time period. The pattern will be different in the case of reverse motion of the magnet causing the control module to determine that back flow is occurring. The control module may increment a different counter to record backflow. Also, backflow in excess of a predetermined amount may cause the shut off valve to be automatically engaged and/or a signal to be sent to the bridge device notifying the water supplier of the existence of the backflow condition.

It should be appreciated that the particular type of water counting mechanism is not critical. Various different sensor types may be used in conjunction with mechanical flow control devices such as a nutating disk to count the volume of water flowing through the water chamber 260, with a general goal of reducing and minimizing current drawn by the sensors.

Referring now to Figure 9, this Figure is a flow chart of a method for measuring water flow with a remote water meter monitoring system. The method begins in block 500 and proceeds to block 505 where water flows into the water flow chamber of the water meter. Generally, such flows are driven by a release of water in a customer premises such as by turning on a faucet.

In block 510, the water flowing into the water flow chamber must pass through a rotating, nutating, or oscillating disk or other flow measuring mechanism, or flow meter, causing a shaft to rotate in accordance with a cycle of the disk. As discussed above in the context of Figure 8A, in one nutation cycle a known volume of water has flowed through the water meter. Next, in block 515, the rotation of the nutation disk, or other flow sensor causes a drive shaft to turn which in turn causes a drive magnet to rotate due to mechanical coupling of the flow sensor to the drive magnet.

The rotation of the drive magnet generates a time changing magnetic field, that is, a change in flux density over time. In block 520, a sensor, such as a Hall effect sensor, or other flux change sensor, detects this changing flux density caused by the drive magnet's rotation. Therein, a non-magnetic material will be used for the water chamber to enable the flux change to be detected through the sealed water chamber. In block 525, the sensor sends a wake-up signal to a control module to "wake up" and begin recording water flow. In block 530, another sensor counts the magnetic pole changes caused by the rotating magnet and sends a count signal to the control module, hi block 535, based on a look-up value corresponding to the parameters of the meter, the control module calculates a flow rate based on the number of nutation cycles. In block 540, a water usage variable is incremented for each unit of flow, such as, for example, for each gallon.

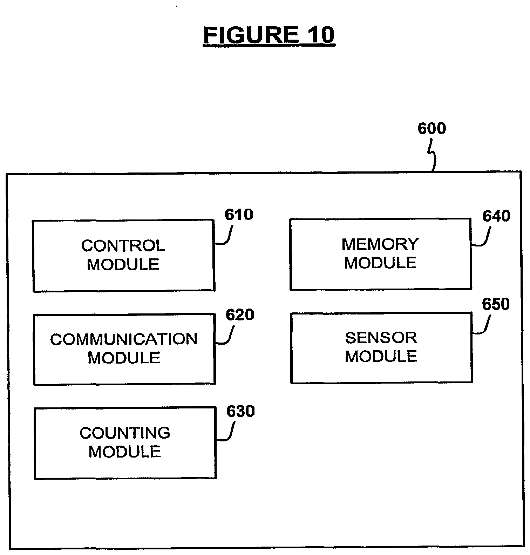

Referring now to Figure 10, this Figure is a block diagram illustrating the various logic modules utilized in the remote water meter monitoring system. The system 600 comprises various modules which may provide functionality for facilitating rewards-based investments over a communication network.

In the example of Figure 10, a control module 610, a communication module 620, a water flow module 630, a sensor module 640 and a memory module 650 are shown. It should be appreciated that each module 610, 620, 630, 640, and 650 may be configured as a software application executing on computer hardware, an application specific integrated circuit (ASIC), a combination of hardware and software, combinations of these, or other suitable configuration. In commercially available mesh network nodes, single package solutions are available that includes a programmable microprocessor and a radio transceiver based on one or more communications protocols, such as, but not limited to, for example, the IEEE 802.15.4 standard for wireless personal area networks (WPANs). It should also be appreciated that one or more of modules 610, 620, 630, 640, and 650 may be combined or broken into multiple additional modules. Furthermore, modules different than the exemplary ones depicted in Figure 10 may be used.

The control module 610 may comprise an embedded microprocessor, DSP, or other processor, or even a real-time kernel of an embedded operating system. The control module 610 may be programmed with an instruction set tailored to the specific application of remote water meter monitoring. For example, the control module 610 may be programmed with a set of instructions that can be received remotely, as well as a set of manufacturer/integrator defined parameters, including a schedule of operator, e.g., uploading data every hour. The control module may also include a system clock.

The communication module 620 may comprise a two-way radio (transceiver) configured to communicate using one or more wireless communications protocols. The communication protocol may also store mesh network selection algorithms for determining an optimal network path. This type of information is typically programmed by the manufacturer of the transceiver. The communication module 620 may permit two-way communication from the system 600 to/from a bridge device, either directly, or through one or more other such systems.

The counting module 630 may receive count signals from one or more sensors or detectors indicative of a water flow through the water flow chamber. The counting module 630 may convert these count signals, based on a stored value correlating the count signals to a particular volume of water, into a flow rate. This flow rate may then be used to increment a running total of water consumption in a particular billing unit, such as in gallons. The counting module 630 may store and increment this value in the memory module 640. The memory module may consist of a relatively small amount of non-volatile memory that is used to store water consumption information as well as information from other sensors and components.

The sensor module 650 may receive information from one or more transducers or other sensors that are capable of sending electrical signals corresponding to physical phenomena. The sensor module 650 may include a standard or non-standard data bus connected to sensor bus adapted to interface with one or more sensors. For example, a pressure sensor may sense ambient water pressure in the pressure chamber and convert this information to an electrical signal that is received by the sensor module 650. The sensor module 650 may poll the sensors to provide information periodically. Alternatively, the sensors may send the information to the sensor module 650 periodically. The sensor module 650 may store this sensor information in the memory module 640 so that it can be uploaded by the control module 610 via the communication module 620 in accordance with an upload schedule or on demand. The sensor module 650 may communicate with individual sensors, such as sensors for pressure, temperature, water quality, etc. Alternatively, the sensor module 650 may communicate with an integrated sensor, such as a lab-on-a-chip or lab-on-a-board that is capable of performing a plurality of different water quality tests in real or near real time.

The various embodiments disclosed herein may provide a remote water meter monitoring system that reduces costs and increases accuracy of water meter reading. Also, various embodiments may provide access to water meter information remotely via network-based interface such as any computing device executing a network browser such as an Internet web browser. Further, various embodiments may provide additional services such as remote water shut off, event-based messaging, back flow detection, and water quality monitoring. For example, the control module may be programmed to upload a message when more than a predetermined amount of water has flowed through the meter, indicating a potential leak situation. This may cause a message to be sent to the water customer based on previously specified contact information. Additionally, the customer may be able to access his/her own account via a server system maintained by the water service provider in order to remotely monitor past and current water usage conditions at the customer's premises. Also, various embodiments may harness mechanical energy from water flowing through the meter to generate power. This power generation may eliminate the need for redundant power systems or line power. Furthermore, by using the capacitor as the primary power source and managing the charging cycles of the system batteries, may extend the life of the system, eliminate the need for battery replacement, and provide additional power for the other sensors discussed herein.

## Claims

1. Water meter monitoring system for remote communication comprising:
a water meter body (265) for coupling a water supply source (110, 115)
to a water consumer (130, 215);
a flow meter (270) contained within the water meter body (265) that is configured to bidirectionally measure a flow rate of water through the water meter body;
a power supply system (287, 290) including at least one battery (294), at least one capacitor, at least one rectifier circuit, and a power generator, wherein the power generator is configured to be powered by a flow of water through the water meter body;
a controller (300) coupled to the water meter body (265) and the power supply system;
at least one antenna (320) connected to the controller (300) for a remote communication; wherein the water meter body (265) further comprises a shut off valve (116) and upon the flow meter (270) detecting reverse water flow causing the shut off valve (116) to trigger when the reverse water flow exceeds a predetermined volume;
a plurality of sensors; wherein the controller (300) is configured to communicate via a communication bus (335) with the plurality of sensors, and wherein the plurality of sensors comprises a first sensor (277A) configured to selectively wake up the controller (300) from a sleep or low power state, a second sensor (277B) configured to count a number of rotations of a magnet (281) that occur upon forward flow of water through the meter, and a third sensor (277C) configured to permit the system to detect a backflow condition, wherein water flowing from a consumer (130) towards the supply source (115),
the first sensor (277A), the second sensor (277B) and the third sensor are configured as magnetic flux detectors arranged around the axis of rotation of the magnet (281) in such a way that the third sensor (277C) is positioned within a predetermined number of radians with respect of the second sensor (277B).

2. System according to claim 1, wherein the power supply system (287, 290) further comprises a switch (296) in communication with the at least one battery (294) and the at least one capacitor (292), the switch (296) permitting selection of either the at least one battery (294) or the at least one capacitor (292) to supply output power.

3. System according to claim 2, wherein the controller and antenna (300, 320) are configured to wirelessly send water usage information to a bridge device (210).

4. System according to claim 3, wherein wirelessly sending water usage information comprises sending information either directly or through at least one other water meter monitoring system at a different node (230) of a wireless communication network (200).

5. System according to claim 3, wherein the system is configured to receive at least one command from the wireless bridge device (210).

6. System according to claim 5, wherein the at least one command is a meter reading transmission request, a status request, or a water shutoff request.

7. System according to claim 1, wherein the shut off valve (116) is remotely activated by a wireless signal received by the system.

8. System according to claim 1, wherein the system is remotely addressable via a communications network with a network content browser.

9. System according to claim 1, wherein the controller (300) is configured to send periodic water usage information wirelessly to the water consumer (130).

10. System according to claim 1, wherein the water meter body (270) further comprises at least one water quality sensor.

11. System of claim 1, wherein the backflow in excess of the predetermined volume amount causes the shut off valve (116) to be automatically engaged and/or a signal to be sent to a bridge device (210) notifying the existence of the backflow condition and remotely activating the shut off valve (116).

12. System of claim 1, wherein the sensor (277A) sends a wake-up signal to a control module containing the controller (300) to wake up and begin a recording of water flow.

## Patentansprüche

1. Wassermessüberwachungssystem für Fernkommunikation, umfassend:
- einen Wassermesskörper (265), um eine Wasserversorgungsquelle (110, 115) an einen Wasserverbraucher (130, 215) zu koppeln;
- einen Flussmesser (270), der innerhalb des Wassermesskörpers (265) enthalten ist und der ausgebildet ist, eine Flussrate von Wasser durch den Wassermesskörper bidirektional zu messen;
- ein Stromversorgungssystem (287, 290), das zumindest eine Batterie (294), zumindest einen Kondensator, zumindest eine Gleichrichterschaltung und einen Stromgenerator enthält, wobei der Stromgenerator ausgebildet ist, von einem Fluss von Wasser durch den Wassermesskörper angetrieben zu werden;
- eine Steuerung (300), die mit dem Wassermesskörper (265) und dem Stromversorgungssystem gekoppelt ist;
- zumindest eine Antenne (320), die mit der Steuerung (300) für eine Fernkommunikation verbunden ist;
- wobei der Wassermesskörper (265) weiter ein Abschaltventil (116) umfasst und wobei bei einer Detektion eines rückwärts gerichteten Wasserfluss des Flussmessers (270) bewirkt wird, dass das Abschaltventil auslöst, wenn der rückwärts gerichtete Wasserfluss ein vorbestimmtes Volumen überschreitet;
- eine Mehrzahl von Sensoren; wobei
- die Steuerung (300) ausgebildet ist, mit der Mehrzahl von Sensoren über einen Kommunikationsbus (335) zu kommunizieren, und wobei
- die Mehrzahl von Sensoren einen ersten Sensor (227A), der ausgebildet ist, die Steuerung (300) selektiv aus einem Schlaf- oder Niedrigstromzustand aufzuwecken, einen zweiten Sensor (277B), der ausgebildet ist, eine Anzahl von Rotationen eines Magneten (281) zu zählen, die bei einem vorwärts gerichteten Wasserfluss durch den Messer auftreten, und einen dritten Sensor (277C), der ausgebildet ist, dem System zu ermöglichen einen Rückflusszustand zu detektieren, wobei Wasser von einem Verbraucher (130) zu der Wasserquelle (115) fließt, umfasst, wobei
- der erste Sensor (277A), der zweite Sensor (277B) und der dritte Sensor als magnetische Flussdetektoren ausgebildet sind, die derart um die Rotationsachse des Magneten (281) angeordnet sind, dass der dritte Sensor (277C) innerhalb einer vorbestimmen Anzahl von Radianten in Bezug auf den zweiten Sensor (277B) angeordnet ist.

2. System nach Anspruch 1, wobei das Stromversorgungssystem (287, 290) weiter einen Schalter (296) umfasst, der in Kommunikation mit der zumindest einen Batterie (294) und dem zumindest einen Kondensator (292) ist, wobei der Schalter (296) eine Auswahl von entweder der zumindest einen Batterie (294) oder dem zumindest einen Kondensator (292) ermöglicht, um einen Ausgangsstrom bereitzustellen.

3. System nach Anspruch 2, wobei die Steuerung und Antenne (300, 320) ausgebildet sind, drahtlos Wasserverbrauchsinformationen an eine Brückenvorrichtung (210) zu senden.

4. System nach Anspruch 3, wobei das drahtlose Senden von Wasserverbrauchsinformationen ein Senden von Informationen entweder direkt oder durch zumindest ein anderes Wassermessüberwachungssystem an einem anderen Knoten eines drahtlosen Kommunikationsnetzwerks (200) umfasst.

5. System nach Anspruch 3, wobei das System ausgebildet ist, zumindest einen Befehl von der drahtlosen Brückenvorrichtung (210) zu empfangen.

6. System nach Anspruch 5, wobei der zumindest eine Befehl eine Messauslese-Übertragungsanfrage, eine Statusanfrage oder eine Wasserabschaltanfrage ist.

7. System nach Anspruch 1, wobei das Abschaltventil (116) durch ein Drahtlossignal, das von dem System empfangen wurde, fernaktiviert wird.

8. System nach Anspruch 1, wobei das System durch ein Kommunikationsnetzwerk mit einem Netzwerkinhaltsbrowser aus der Ferne adressierbar ist.

9. System nach Anspruch 1, wobei die Steuerung (300) ausgebildet ist, periodische Wasserverbrauchsinformationen drahtlos an den Wasserverbraucher (130) zu senden.

10. System nach Anspruch 1, wobei der Wassermesskörper (270) weiter zumindest einen Wasserqualitätssensor umfasst.

11. System nach Anspruch 1, wobei der Rückfluss, der die vorbestimmte Volumenmenge überschreitet, bewirkt, dass das Abschaltventil (116) automatisch eingreift und/oder dass ein Signal an eine Brückenvorrichtung (210) gesendet wird, das über das Vorhandensein des Rückflusszustands in Kenntnis setzt und das Abschaltventil (116) fernaktiviert.

12. System nach Anspruch 1, wobei der Sensor (227A) ein Aufwecksignal an ein Steuermodul, das die Steuerung (300) enthält, sendet, um aufzuwecken und eine Aufzeichnung des Wasserflusses zu beginnen.

## Revendications

1. Système de surveillance de compteur d'eau pour communication à distance comprenant :
- un corps (265) de compteur d'eau destiné à raccorder une source d'alimentation en eau (110, 115) à un consommateur d'eau (130, 215) ;
- un débitmètre (270) disposé à l'intérieur du corps (265) de compteur d'eau qui est conçu pour mesure bi-directionnellement un écoulement d'eau à travers le corps du compteur d'eau ;
- un système d'alimentation électrique (287, 290) comprenant au moins une batterie (294), au moins un condensateur, au moins un circuit redresseur et un générateur d'énergie électrique, le générateur d'énergie électrique étant conçu pour être alimenté par un écoulement d'eau à travers le corps du compteur d'eau ; un organe de commande (300) couplé à un corps (265) de compteur d'eau et au système d'alimentation électrique ;
- au moins une antenne (320) connectée à l'organe de commande (300) pour une communication à distance ; le corps (265) du compteur d'eau comprenant en outre un robinet de sectionnement (116) et dès que le débitmètre (270) détectant un écoulement d'eau inverse amène le robinet de sectionnement (116) à se déclencher lorsque l'écoulement d'eau inverse dépasse un volume prédéfini ;
- une pluralité de capteurs, l'organe de commande (300) étant conçu pour communiquer par l'intermédiaire d'un bus de communication (335) avec la pluralité de capteurs et la pluralité de capteurs comprenant un premier capteur (277A) conçu pour réveiller sélectivement l'organe de commande (300) d'un état de veille ou de faible puissance, un deuxième capteur (277B) conçu pour compter un nombre de rotations d'un aimant (281) qui se produisent dès l'acheminement de l'écoulement d'eau à travers le compteur, et un troisième capteur (277C) conçu pour permettre au système de détecter un état de refoulement d'eau, l'eau s'écoulant à partir du consommateur (130) en direction de la source d'alimentation (115), le premier capteur (277A), le deuxième capteur (277B) et le troisième capteur étant conçus comme des détecteurs de flux magnétiques disposés autour de l'axe de rotation de l'aimant (281) de telle sorte que le troisième capteur (277C) soit positionné à l'intérieur d'un nombre défini de radians par rapport au deuxième capteur (277B).

2. Système selon la revendication 1, le système d'alimentation électrique (287, 290) comprenant en outre un commutateur (296) en communication avec ladite batterie (294) et ledit condensateur (292), le commutateur (296) permettant de sélectionner soit ladite batterie (294) soit ledit condensateur (292) pour alimenter en puissance de sortie.

3. Système selon la revendication 2, l'organe de commande et l'antenne (300, 320) étant conçus pour envoyer sans fil les informations d'utilisation d'eau à un dispositif pont (210) .

4. Système selon la revendication 3, l'envoi sans fil des informations d'utilisation d'eau comprenant l'envoi d'informations soit directement soit par l'intermédiaire d'un autre système de surveillance d'eau au niveau d'un noeud différent (230) d'un réseau de communication sans fil (200).

5. Système selon la revendication 3, le système étant conçu pour recevoir au moins une commande en provenance du dispositif pont sans fil (210).

6. Système selon la revendication 5, ladite commande étant une requête de transmission de lecture de compteur, une requête d'état ou une requête de coupure d'eau.

7. Système selon la revendication 1, le robinet de sectionnement (116) étant activé à distance par un signal sans fil reçu par le système.

8. Système selon la revendication 1, le système étant adressable à distance par l'intermédiaire d'un réseau de communication au moyen d'un navigateur de contenu de réseau.

9. Système selon la revendication 1, l'organe de commande (300) étant conçu pour envoyer sans fil les informations d'utilisation d'eau périodiques au consommateur d'eau (130).

10. Système selon la revendication 1, le corps (270) de compteur d'eau comprenant en outre au moins un capteur de qualité d'eau.

11. Système selon la revendication 1, le refoulement de la quantité de volume prédéfini en excès amène le robinet de sectionnement (116) à s'enclencher automatiquement et/ou un signal à être envoyé à un dispositif pont (210) notifiant l'existence de l'état de refoulement et activant à distance le robinet de sectionnement (116).

12. Système selon la revendication 1, le capteur (277A) envoyant un signal de réveil à un module de commande contenant l'organe de commande (300) pour réveiller et démarrer un enregistrement de l'écoulement d'eau.
